# EUROPEAN PATENT SPECIFICATION

(11) **EP 0 481 969 B1**
(45) Date of publication and mention of the grant of the patent: **28.09.1994**
(21) Application number: 92200169.8
(22) Date of filing: 14.11.1988
(51) Int. Cl.: B65G 1/06, B65G 25/02

(54) **Shop rack**
Ladenregal
Etagère

(30) Priority: 13.11.1987 NL 8702725
(43) Date of publication of application: 22.04.1992
(62) Divisional of application: 88202534.9
(73) Proprietor: ALBERT HEIJN B.V., NL-1506 CK Zaandam (NL)
(72) Inventor: Borghuis, Jan, NL-7461 CA Rijssen (NL)
(74) Representative: Smulders, Theodorus A.H.J., Ir.

(56) References cited:
- FR-A- 1 288 955
- FR-A- 2 092 826
- GB-A- 2 185 457
- US-A- 3 048 258
- US-A- 3 221 870
- US-A- 3 881 633

## Description

This invention relates to a shop rack comprising a plurality of shelves, on which goods can be displayed, and a frame supporting the shelves.

Racks of this kind are well known and are frequently being used in self-service shops. The goods are mostly packaged in jars, bags, cartons and the like, and placed in rows one behind the other. This means that, for example, one or more rows of bags of crystal sugar are arranged transversely to the longitudinal direction of shelf. Next to the bags of sugar, for example, one or more rows of boxes of sugar lumps may be placed, etc. The shopping public can then take the foremost bag of sugar, or box or sugar lumps etc. and put it in a trolley.

GB-A-2185457 discloses cold store provided with an apparatus for conveying packages of foodstuff through the cold store. The apparatus comprises several floors arranged one above the other, with each floor being defined by walking beam or pusher conveyors for conveying the packages in mutually spaced relationship.

In a self-service shop, in order to ensure a well-arranged and ordered display of goods, it is the practice for the shop attendants regularly to push forward the rows of products, which rows have become shortened owing to the removal of the foremost products. The racks thus remain filled as much as possible at the front side facing the public and interspaces between products in a row are avoided. Pushing the products placed on a shelf of a shop rack forwardly in the manner described is called "trimming"

Such trimming is a highly labour-intensive and often tiring work, in particular in the case of low-level shelves and in the case of high and/or relatively deep shelves.

There is accordingly a need for a possibility of automating this work.

It is an object of the present invention to meet this need. To this effect, according to the invention, a shop rack of the above kind is characterized by drive means for the conveyor means, said drive means being arranged to service simultaneously at least some superimposed shelves.

It is noted that it has been tried in the past to achieve the effect contemplated by means of shelves inclined downwardly to the front. As soon as the foremost product of a row of products is removed, the remaining row of products slides forwardly by gravity. One disadvantage of that solution is that the shelves should be placed at rather a steep angle to ensure that the products of a row slide forwardly in the manner contemplated under all conditions. In the case of fragile products, for example, glass jars, damage may occur. Also, with that arrangement, the public has no time to return a product removed from the shelf.

One embodiment of the invention will now be described, by way of example, with reference to the accompanying drawings, in which
Fig. 1 diagrammatically illustrates one of the possible techniques of conveying goods to the front of a shelf;
Figs. 2 and 3 show two variants of the technique shown in Fig. 1;
Fig. 4 diagrammatically shows, in cross-sectional view, a shelf provided with a conveyor for a shop rack according to the present invention in a number of successive conditions;
Fig. 5 shows the shelf of Fig. 4 diagrammatically in top plan view;
Fig. 6 is a diagrammatic side-elevational view, showing one example of a practical embodiment of a shop rack according to the invention;
Fig. 7 shows a detail of Fig. 6 on a larger scale;
Fig. 8 shows a detail of Fig. 7;
Fig. 9 shows an example of a studded strip for use in a rack according to the invention; and
Fig. 10 shows a modification of an embodiment of the present invention.

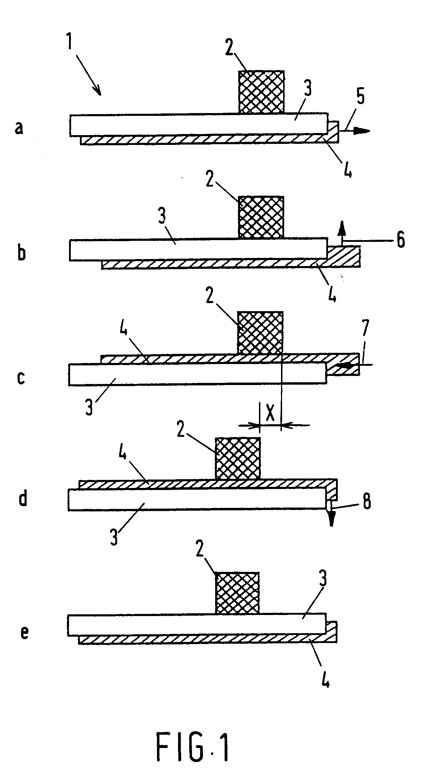

Fig. 1 diagrammatically illustrates one of the possible techniques of displacing goods placed in a shop rack in a desired direction, i.e., towards the side adjoining the passageway for the public.

Generally speaking, a great many different techniques are available for achieving the object contemplated. Thus, for example, use can be made of pushers which periodically push up each row of products at the rear. Such an embodiment of the invention requires means for adapting the pushing force to be exerted to the products to be moved. Furthermore, means are required for terminating the pushing-up movement as soon as a resistance is experienced which exceeds a pre-determined value.

It is also possible to use conveyor belts extending transversely to the longitudinal direction of a shelf and capable of taking along the goods in the desired direction. The conveyor belts may be supported in addition to two end rollers by supporting rollers in the area intermediate the end rollers, and may for example be driven periodically. When the articles placed on such a conveyor belt have reached the front edge of a shelf, the articles abut against a stop, and the conveyor belt can move slippingly under the articles.

Alternatively, use can be made of a system operating by the so-called moving-floor principle. In that system articles placed on a supporting surface can be displaced by virtue of the fact that the supporting surface is constituted by a plurality of groups of elongate slats movable in the longitudinal direction. The slats are, for example, first moved one by one in one direction, sliding under the articles, because the latter are supported simultaneously on a plurality of slats which are not moved. Subsequently, the slats are all moved simultaneously in the other direction, so that the articles are taken along.

In the techniques described hereinbefore, the articles to be displaced are invariably moved in one plane.

According to a different technique, the articles to be displaced are lifted off the supporting surface, moved in the desired direction for a pre-determined distance, and are then again lowered on to the supporting surface.

This technique, which for example could be used with slats similar to those described above, is illustrated in the accompanying Figs. 1-3.

Fig. 1 is a diagrammatic side-elevational view, showing a shelf 1 of a shop rack, on which an article 2 has been placed. The shelf is comprised of two interengaging parts 3 and 4. The parts 3 and 4 can be moved relatively to each other in a manner to be described hereinafter and by means to be described hereinafter. Fig. 1 shows at a-e five positions which the shelf sections and an article to be displaced can occupy.

In the rest position shown in Fig. 1a the article 2 is supported by the first shelf section 3. This, for example, may be a carrier comprised of slats, such as strips, mounted in side-by-side, spaced parallel relationship. The second shelf section 4 may be built up in a similar way, with the slats disposed in the interspaces between the slats of shelf section 3.

In the example shown in Fig. 1, the first shelf section is stationary, and the second is at a slightly lower level than the first. This, however, is not essential. To displace an article 2 or a row of such articles to the front of the shop rack (in the example shown: to the left), the second shelf section 4 is moved to the rear (i.e., to the right in Fig. 1), as indicated by an arrow 5. If the shelf sections have co-planar upper surfaces in the rest position, the second shelf section is preferably first moved downwardly somewhat. In certain conditions, specifically when there is lower friction between the second shelf section and the article 2 than there is between the stationary first shelf section and the article 2, it is in principle unnecessary for the second shelf section to be first moved downwards.

The first intermediate position, reached from the initial position shown in Fig. 1a by shifting the second shelf section backwards is shown in Fig. 1b. The next step is an upward movement of the second shelf section, as indicated by an arrow 6.

Owing to this upward movement, the second intermediate position, shown in Fig. 1c, is reached. The article 2 is now no longer supported by the stationary first shelf section 3, but by the second shelf section 4.

Subsequently, the second shelf section is moved forwardly, i.e., to the left in Fig. 1, as indicated by an arrow 7 in Fig. 1c. During this movement, the second shelf section takes along the article 2 over a pre-determined distance, so that the position shown in Fig. 1d is reached.

Finally, the second shelf section is again moved downwards as indicated by an arrow 8 in Fig. 1d, to reach the condition shown in Fig. 1e, in which the article 2 is again supported by the stationary first shelf section.

Fig. 1e corresponds essentially to Fig. 1a, with the difference that the article 2 has been transported forwardly through a distance X.

After a number of such transport cycles, the article or the row of articles is in the desired position, with the rack being entirely filled at the front.

Naturally, a raised edge or the like is provided at the front to prevent the articles from falling out of the rack.

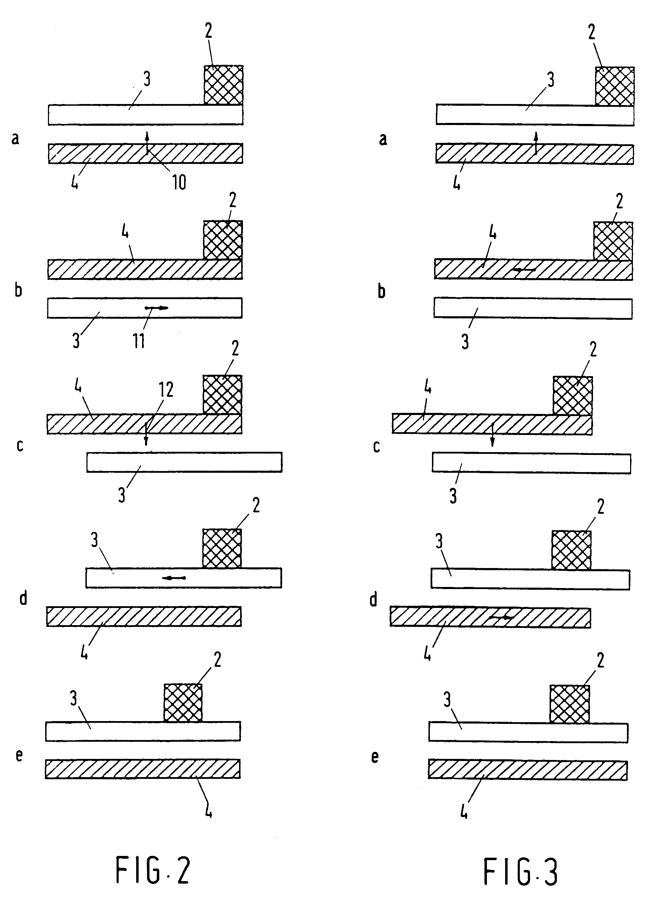

Fig. 1 illustrates a variant of the technique shown in Fig. 1. As shown in Fig. 2, the article 2 is supported in the rest position on the first shelf section 3. The second shelf section 4 is then subjacent to (or at the same level as) the first shelf section.

To transport the article 2, the second shelf section is moved upwards (arrow 10) thereby taking over article 2. Next the first shelf section 3 is moved backwards (arrow 11). Thereafter the second shelf section moves downwards again (arrow 12) until the article is again supported by the first shelf section, as shown in Fig. 2d. Thereafter the first shelf section moves forward again, i.e., to the starting position, as indicated by an arrow 13, until the condition shown in Fig. 2e is reached.

According to the variant shown in Fig. 3, the second shelf section moves upward from a low position, thereby lifting the article off the first shelf section. Subsequently, the second shelf section moves forward and then downwards until the article is back on the first shelf section 3. Finally, the second shelf section moves back into the starting position (Fig. 3e).

As stated before, the technique described with reference to Figs. 1-3 can be practiced by means of slats which extend transversely to the longitudinal direction of the shelf concerned and are movable relatively to each other, which slats are divided into at least two relatively movable groups. The slats may advantageously constitute lattices formed of strips, ribbons, rods, wires or threads, with the slats of one lattice being interposed between the slats of the other lattice, with both lattices being movable in the vertical direction, and one being movable in a horizontal direction relative to the other through a certain distance. The lattice slats should be arranged to pass each other in the vertical direction, which excludes the use of cross-connections, unless the slats are provided with notches or discontinuities.

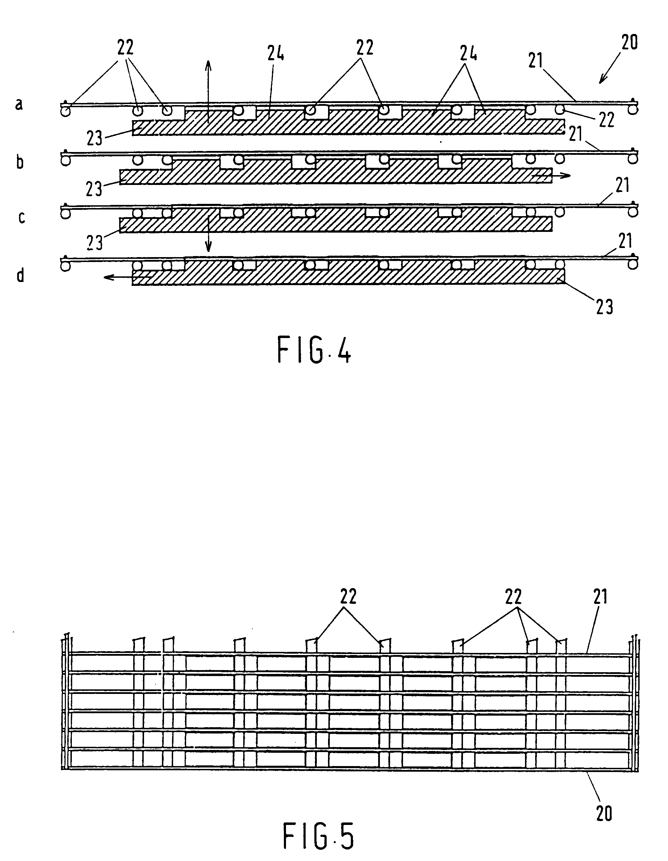

Figs.4 and 5 diagrammatically show an example of a conveyor system or use in a shop rack, which operates in the manner described above and thus permits cross-connections in the supported surface. In the example shown in Figs. 4 and 5, the supporting surface of the shelf of a shop rack consists of a wire lattice 20 with longitudinal wires 21 and transverse wires or cross-wires 22. The longitudinal wires extend in the direction of transport, i.e., transversely relative to the longitudinal direction of the shelf, and the cross-wires extend transversely to the direction of transport.

Furthermore, there is shown a carrier 23 provided with studs 24. The carrier is arranged just below the wire lattice in such a manner that the studs 24 can extend through the meshes of the wire lattice. Furthermore, the length of each mesh of the wire lattice, as viewed in the direction of the longitudinal wires 21, exceeds the corresponding dimension of studs 24.

Fig. 2 shows, in steps a-d, the manner in which a row, not shown, of articles placed on the shelf can be moved to the left. In this case, too, variants are possible, similar to those described with reference to Figs. 1-3.

Fig. 5 shows in top plan view diagrammatically a portion of a shelf as illustrated in Fig. 4 in the situation shown in Fig. 4a or 4b.

It is noted that the lattice may alternativley be made of horizontally and/or vertically disposed strips, in combination with wire or rod material, or otherwise.

The studs may be formed integrally with a substantially imperforate carrier, as shown, but may alternatively be separate members mounted on a carrier, each forming one or more studs. The carrier of the studs may be formed as a wire lattice, a lattice of strips, or the like, to which studs made of a suitable material, e.g., plastics, are secured.

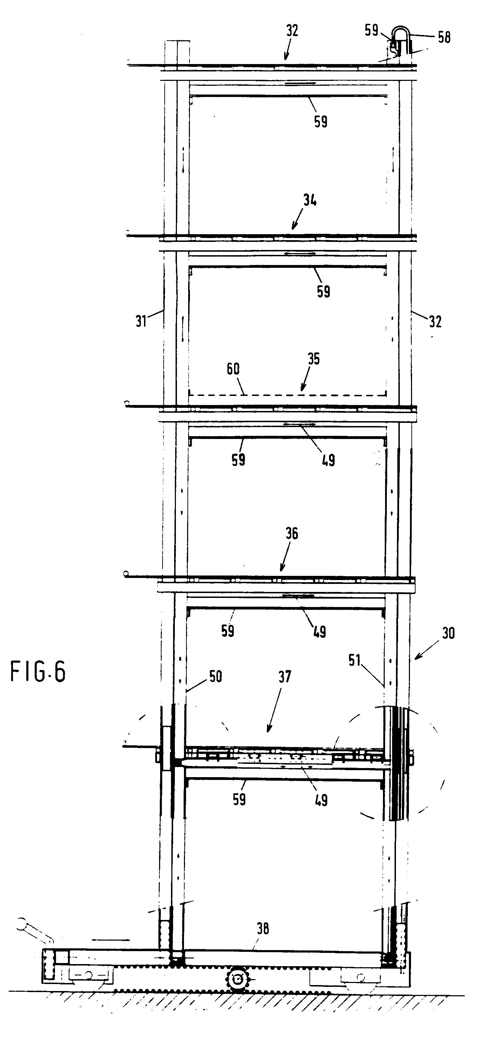

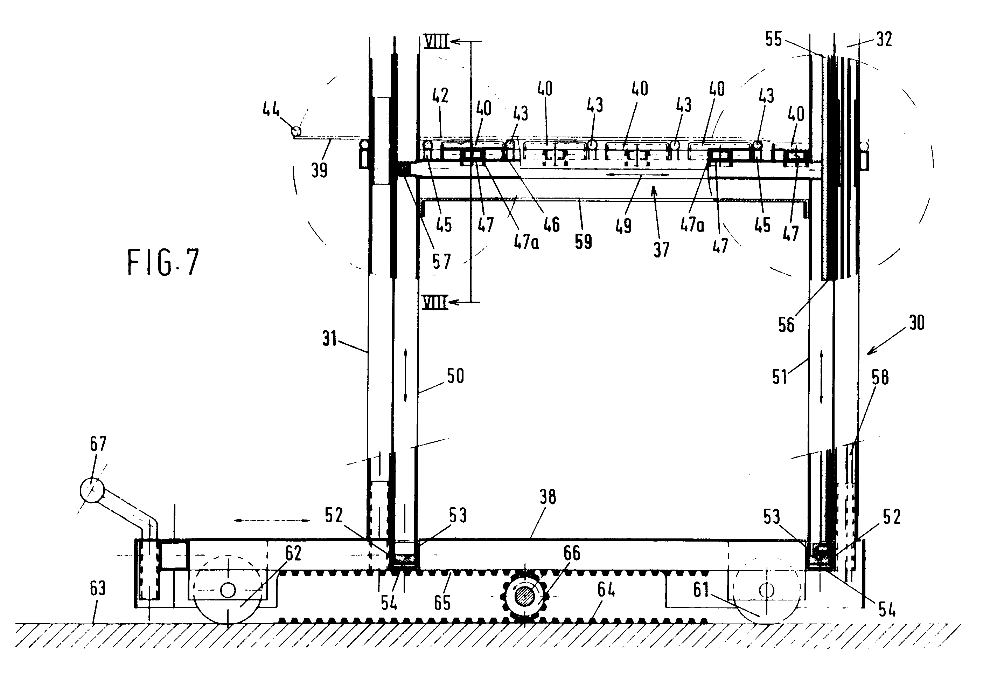

Fig. 6 diagrammatically shows in side-elevational view an example of a shop rack according to the invention, and Fig. 7 shows, on a larger scale, the lower portion of Fig. 6. The rack shown comprises a frame with front uprights 31 and rear uprights 32. The rear uprights may constitute part of a closed rear wall. It is also possible to use a self-supporting closed rear wall. In the two latter cases, however, it is not possible to replenish the rack from the back.

There are further shown five shelves 33,34,35,36 and 37, and a bottom plate 38. In the example shown, the shelves are all of the self-trimming type. If desired, the bottom plate 38 may be of the self-trimming type as well.

In this example, the shelves shown are built up, in accordance with the principle shown in Figs. 4 and 5, of a lattice 39 and a carrier 41 provided with studs 40. In this example, the transporting movement, similarly to the arrangement shown in Figs. 4 and 5, is fully carried out by the studded carrier, while the lattice 39, which in this example is a wire lattice built up from longitudinal wires 42 and cross-wires 43, is stationary.

In this example, the wire lattice is formed so that the longitudinal wires 42 constitute the supporting surface for the products, while the cross-wires 43 are located under the longitudinal wires and support these. The cross-wires themselves, at least some of them, are carried by supporting blocks 45, which, in turn, are secured to frame members, not shown, fixedly connected to uprights 31,32.

In this example, the wire lattice 39 extends at the front beyond the front upright 31, and is provided with a stop 44 to prevent the products from falling off the shelf. In the example shown, the stop is a cross-wire provided on the longitudinal wires, but other forms are possible. The required height of the stop depends on the shape of the products and on the size of the vertical stroke of the conveyor mechanism.

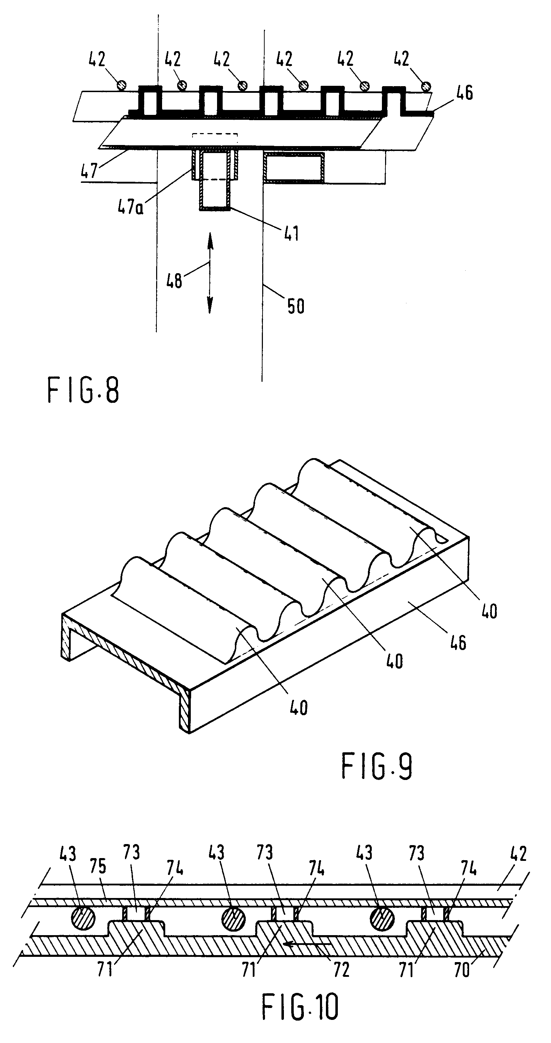

Advantageously, the lattice of studs is built up from a plurality of studded strips, which extend in the longitudinal direction of the rack, i.e., across the direction of transport. Such a studded strip is shown in Fig. 7 at 46 in cross-sectional view, and in Fig. 8 in longitudinal sectional view. In the example shown, the studded strips have somewhat elongated studs, as viewed in the direction of movement, which as shown in Fig. 8 may be of angular castellated form, but alternatively may have a more rounded form.

Fig. 9 shows, in perspective view, an example of a suitable studded strip.

It is noted that, in principle, each elongated stud could be sub-divided into one or more smaller studs.

Advantageously, the studded strips are moulded plastics strips, each carried by a metal section. In the example shown, a channel section 47 has been used. The channel sections 47 each rest on two or more carriers 41, extending between a front and a rear upright of the rack, which in the example shown consist of a vertical rectangular metal section. The channel sections 47 are coupled by means of draggers 47a to carriers 41, as shown in Fig. 8. Carriers 41 are vertically movable up and down in a manner to be described hereinafter, and are also reciprocatable in the longitudinal direction, as indicated by arrows 48 (Fig. 8) and 49 (Figs. 6 and 7).

The movements of the moving parts of the shelves, required for trimming the articles placed on the shelves can be accomplished in various ways. It is possible for the moving parts of a shelf to be driven, starting from a rotary movement, generated in one of the manners known for the purpose, by means of eccentric transmission. It is also possible to effect a reciprocating movement directly by means of well-known hydraulic, pneumatic, electric or electromagnetic elements.

The driving mechanism shown diagrammatically in Figs. 6 and 7 uses pneumatic tubes for causing the required movements of the movable part of the shelves, in this example the studded carriers. In addition the rack is arranged so that all shelves of the rack are operated simultaneously.

For this purpose, a pair of uprights 50,51, made of hollow tube, is arranged for up and down movement next to, or between, at least two pairs of fixed uprights 31,32. Uprights 50,51 are slidably coupled with the fixed uprights in a manner not shown. The movable uprights 50,51 each rest on a lift strip 52, located in a horizontal rectangular or U-shaped section 53, which in this example extends in the longitudinal direction of the rack.

Under the lift strip 52, within section 53, is a pneumatic tube 54, coupled to a source of compressed air in a manner not shown.

When pressure is applied to tubes 54, the tubes expand, and as a result the uprights 50,51 move upwards, thereby taking along the carriers 41 connected to uprights 50,51. Lattice 39 is connected to the fixed uprights 31,32, and consequently does not move upwards. With a proper setting, the result of the rising movement is a situation as shown in Fig. 4b, in which the studs just project above the lattice and (temporarily) have taken over the carrying function of the lattice.

As shown by Fig. 4, after the upward movement a horizontal movement is required. To effect this horizontal movement, in this example, a vertical pushing strip 55 is provided in the rear movable uprights 51. The vertical pushing strip has a surface facing the front of the rack, which is in contact with the ends of carriers 41. If the carriers 41 are platforms or the like, rather than sections, suitable projections are provided.

The rear ends of carriers 41 extend through openings in the wall of the movable uprights 51 into said uprights. Similarly, the front ends of carriers 41 extend into the front movable uprights 50.

Disposed behind the vertical pushing strip 55 is a pneumatic hose 56, arranged within the hollow movable uprights 51, which hose expands under pressure and then pushes the pushing strip forwardly. The carriers 41 are slidable in openings in the movable uprights 50,51.

After the horizontal pneumatic hoses have been energized, the vertical pneumatic hoses are energized. Subsequently, the horizontal hoses are released, as a result of which the movable uprights with the stud carriers move downwardly by gravity. Thereafter the vertical hoses are released. For the backward movement of the stud carriers, corresponding pneumatic hoses could be used in the front movable uprights 50. Preferably, however, a resetting spring is used, which in this example is the compression spring 57 arranged between the end of the carriers 41 extending into the front uprights, and the inner wall of these uprights.

Shown at 58 is a connecting hose for the vertical pushing hose 56. The connecting hose 58, in this example, extends through the fixed rear upright 32, and is coupled to pushing hose 56 at 59 at the top of the rack.

The front and rear movable uprights are preferably interconnected with a connector 59 at least some shelves. In the drawings, the connectors are shown below the level of the shelves. Advantageously, however, the connectors are arranged just above the level of the shelves, as shown in Fig. 6 in ghost outline at 60. The connectors can then also serve as guides for the articles to be conveyed on the shelves and prevent the articles to be conveyed from catching behind an upright.

Shop racks of the kind described, in which the products are transported from the rear forwardly are excellently suitable for being loaded from the rear. For this purpose, the rear of the rack is preferably of open construction or one that can be opened in a simple manner. Furthermore, the racks should be accessible at the rear. This latter is often not the case, because the racks are often arranged against a wall or back-to-back with other racks.

For this reason, a shop rack according to the invention is preferably of mobile construction, as shown in Figs. 6 and 7. Wheels 61 and 62 travel over shop floor 63. In the example shown, a toothed rack 64,65 is provided on the shop floor and on the bottom of the rack, respectively. Arranged between, and meshing with, the toothed racks is a pinion 66, which for example can be driven by means of a motor or manually through an operating rod. The toothed racks may be toothed plastics strips.

A guide rod 67 for trolleys and the like is shown at the front of the rack.

It is noted that, after reading the foregoing, various modifications will readily occur to one skilled in the art. Thus, for example, thin strips may be arranged between the top face of a series of studs and the bottom of the products, which strips are located between the longitudinal wires 42 of the wire lattice above the cross-wires. Such strips are then thinner than the longitudinal wires 42 and consequently carry the products only during a conveying stroke. The strips render it possible to use fewer and/or smaller studs, so that, for example, it is not necessary for a studded strip to be arranged under the foremost part of a shelf. Such strips may be arranged to lie loosely, but are preferably connected to the stud at a plurality of points, for example, by means of a nesting clamping connection. An example is shown diagrammatically in Fig. 10.

Fig. 10 shows a studded platform 70 with studs 71. Arranged between the studs are, again, cross-wires 43 of a lattice 39. Furthermore, part of a longitudinal wire 42 of the lattice is visible. The direction of transport is indicated by an arrow 72. Some of the studs are provided with a projection 73, which fits within or around a projection 74, of complementary shape, provided at the bottom of a thin strip 75, for example of plastics, located on the transverse wires.

According to another modification, for example, a stretched piece of driving chain could be used instead of a toothed rack. Also, the pinion could be secured to the bottom of the rack so as to be fixed, but rotatable. The top toothed rack can then be done without.

A shop rack according to this invention can be equipped with means, such as light-sensitive elements and appurtenant light sources, by means of which it can be detected whether there are any products on the front part of a shelf. If not, the conveyor system can be energized (automatically) for the rack in question.

## Claims

1. A shop rack comprising a plurality of shelves (33-37) on which articles can be displayed, and a frame supporting said shelves (33-37), wherein a number of shelves are provided with conveyor means (3,4) capable of transporting articles placed on the shelf to the front of the shelf, and drive means (54,55) for the conveyor means (3,4), characterized by said drive means being arranged to service simultaneously at least some superimposed shelves (33-37).

2. A shop rack as claimed in claim 1, characterized in that the drive means comprise a plurality of pneumatic hoses (54) which expand when a pressure medium is pumped into them under pressure.

3. A shop rack as claimed in claim 2, characterized in that the drive means comprise a plurality of movable uprights (50,51) carrying vertically movable parts (41) of a plurality of shelves arranged to be jointly moved up and down through power transmitting means by energizing one or more pneumatic hoses (54).

4. A shop rack as claimed in claim 3, characterized in that the movable uprights (50,51) each stand on a lifting strip (52), which lifting strips (52), in turn, rest on a pneumatic hose (54) laid in a retaining section.

5. A shop rack as claimed in claim 3 or 4, characterized in that the movable uprights (50,51) are arranged next to fixed uprights (31,32) and are connected to said fixed uprights (31,32) so as to be slidable upwardly and downwardly.

6. A shop rack as claimed in any of claims 3-5, characterized in that the vertically movable parts (41) of the shelves are carried by the movable uprights (50,51) for reciprocating movement in the horizontal direction.

7. A shop rack as claimed in claim 6, characterized in that at least some of at least the movable uprights (50,51) on one longitudinal side of the rack are hollow uprights housing a pneumatic hose (56) in operative association with the movable parts (41) of the shelves through power transmitting means.

8. A shop rack as claimed in claim 7, characterized in that the pneumatic hose (56) hangs within the hollow uprights (51) between a wall member of the hollow uprights (51) and a pushing strip (55) arranged within the hollow uprights, and that, at the level of the shelves, openings are provided in the wall portion of the hollow uprights (51) opposite to the pushing strip (55), through which projections of the movable parts (41) of the shelves extend into the hollow uprights (51).

9. A shop rack as claimed in any of claims 6-8, characterized by resetting means (57) cooperating in horizontal direction with the movable parts of the shelves.

10. A shop rack as claimed in claim 7 or 8 and claim 9, characterized in that one of a pair of movable uprights opposing each other on different longitudinal sides of a rack is a pneumatic hose, and the other of said pair contains the resetting springs (57) cooperating with the movable parts (41) of the shelves.

11. A shop rack as claimed in any of claims 3-10, characterized in that each pair of movable uprights (50,51) opposing each other on different longitudinal sides of a rack are rigidly interconnected through connectors (59).

12. A shop rack as claimed in claim 11, characterized in that the connectors (59) comprise a plurality of ledgers provided just above the level of the shelves, and also serving as guides for articles placed on the shelves.

13. A shop rack as claimed in any of the preceding claims, characterized in that the rack has a rear wall permitting the shelves (33-37) to be replenished from the rear.

14. A shop rack as claimed in claim 13, characterized in that the rack is mobile at least transversely to the longitudinal direction of the shelves (33,-37).

15. A shop rack as claimed in claim 13, characterized by at least one drivable pinion (66) being mounted at the bottom of the rack, which pinion is in engagement with at least one toothed rack (64,65).

16. A shop rack as claimed in any of the preceding claims, characterized by detection means arranged to cooperate with at least a section of the front of one or more shelves (33-37) to determine whether such section carries articles at the front side, and in the absence of articles at said front side of the sections can cause the conveyor means to be energized.

17. A shop rack as claimed in claim 16, characterized in that the detection means comprise at least one light-sensitive cell and an appurtenant light source.

## Patentansprüche

1. Ladenregal mit mehreren Fächern (33-37), in denen Artikel ausgestellt werden können, und einem die Fächer (33-37) hältenden Rahmen, bei dem eine Anzahl von Fächern mit Fördereinrichtungen (3,4), die zum Transportieren von in dem Fach plazierten Artikeln zur Vorderseite des Faches imstande sind, und mit Antriebseinrichtungen (54,55) für die Fördereinrichtungen (3,4) versehen ist,
**dadurch gekennzeichnet,**
daß die Antriebseinrichtungen derart angeordnet sind, daß sie gleichzeitig für mindestens einige übereinanderliegende Fächer (33-37) dient.

2. Ladenregal nach Anspruch 1, dadurch gekennzeichnet, daß die Antriebseinrichtungen mehrere pneumatische Schläuche (54) aufweisen, die expandieren, wenn ein Druckmedium unter Druck in sie gepumpt wird.

3. Ladenregal nach Anspruch 2, dadurch gekennzeichnet, daß die Antriebseinrichtungen mehrere bewegbare Vertikalteile (50,51) aufweisen, die vertikal bewegbare Teile (41) mehrerer Fächer tragen, die derart angeordnet sind, daß sie mittels Kraftübertragungseinrichtungen durch Aktivierung eines oder mehrerer pneumatischer Schläuche (54) zusammen auf- und abbewagbar sind.

4. Ladenregal nach Anspruch 3, dadurch gekennzeichnet, daß jedes der bewegbaren Vertikalteile (50,51) auf einer Hebeleiste (52) steht, wobei dei Hebeleisten (52) ihrerseits auf einem pneumatischen Schlauch (54) ruhen, der in einem Halteabschnitt angeordnet ist.

5. Ladenregal nach Anspruch 3 oder 4, dadurch gekennzeichnet, daß die bewegbaren Vertikalteile (50,51) in der Nähe von feststehenden Vertikalteilen (31,32) angeordnet und derart an den feststehenden Vertikalteilen (31,32) befestigt sind, daß sie aufwärts und abwärts gleitbar sind.

6. Ladenregal nach einem der Ansprüche 3 - 5, dadurch gekennzeichnet, daß die vertikal bewegbaren Teile (41) der Fächer zur Vor- und Zurückbewegung in vertikaler Richtung von dem bewegbaren Vertikalteilen getragen sind.

7. Ladenregal nach Anspruch 6, dadurch gekennzeichnet, daß mindestens einige zumindest der bewegbaren Vertikalteile (50,51) an einer Längsseite des Regals hohle Vertikalteile sind, in denen ein pneumatischer Schlauch (56) untergebracht ist, der durch Kraftübertragungseinrichtungen in arbeitsmäßiger Verbindung mit den bewegbaren Teilen (41) der Fächer steht.

8. Ladenregal nach Anspruch 7, dadurch gekennzeichnet, daß der pneumatische Schlauch (56) innerhalb der hohlen Vertikalteile (51) zwischen einem Wandteil der hohlen Vertikalteile (51) und einer Schiebeleiste (55), die in den hohlen Vertikalteilen angeordnet ist, hängt, und daß auf der Ebene der Fächer in dem Wandbereich der hohlen Vertikalteile (51) der Schiebeleiste (55) gegenüberliegend Öffnungen vorgesehen sind, durch die sich Vorsprünge der bewegbaren Teile (41) der Fächer in die hohlen Vertikalteile (51) erstrecken.

9. Ladenregal nach einem der Ansprüche 6 - 8, gekennzeichnet durch Rückstelleinrichtungen (57), die in horizontaler Richtung mit den bewegbaren Teilen der Fächer zusammenwirken.

10. Ladenregal nach Anspruch 7 oder 8 und Anspruch 9, dadurch gekennzeichnet, daß ein Vertikalteil eines Paares bewegbarer Vertikalteile, die einander an unterschiedlichen Längeseiten eines Regals gegenüberliegen, ein pneumatischer Schlauch ist, und daß das andere Vertikalteil des Paares Rückstellfedern (57) enthält, die mit den bewegbaren Teilen (41) der Fächer zusammenwirken.

11. Ladenregal nach einem der Ansprüche 3 - 10, dadurch gekennzeichnet, daß jedes Paar bewegbarer Vertikalteile (50,51), die einander an unterschiedlichen Längsseiten eines Regals gegenüberliegen, durch Konnektoren (59) starr miteinander verbunden ist.

12. Ladenregal nach Anspruch 11, dadurch gekennzeichnet, daß die Konnektoren (59) mehrere Leisten aufweisen, die geringfügig über der Ebene der Fächer angeordnet sind und ferner als Führung für in den Fächern plazierte Artikel dienen.

13. Ladenregal nach einen der vorhergehenden Ansprüche, dadurch gekennzeichnet, daß das Regal eine Rückwand aufweist, die ein Wiederauffüllen der Fächer (33-37) von hinten erlaubt.

14. Ladenregal nach Anspruch 13, dadurch gekennzeichnet, daß das Regal mindestens quer zur Längsrichtung der Fächer (33-37) bewegbar ist.

15. Ladenregal nach Anspruch 13, gekennzeichnet durch mindestens ein am Boden des Regals montiertes antreibbares Zahnrad (66), das mit mindestens einer Zahnstange (64,65) in Eingriff ist.

16. Ladenregal nach einem der vorhergehenden Ansprüche, gekennzeichnet durch Detektionseinrichtungen, die mit mindestens einem Abschnitt der Front eines oder mehrerer Fächer (33-37) zusammenwirken, um festzustellen, ob der Abschnitt an der Frontseite Artikel trägt, und die bei Nichtvorhandensein von Artikeln an der Frontseite der Abschnitte die Aktivierung der Fördereinrichtungen veranlassen können.

17. Ladenregal nach Anspruch 16, dadurch gekennzeichnet, daß die Detektionseinrichtungen mindestens eine lichtempfindliche Zelle und eine zugehörige Lichtquelle aufweisen.

## Revendications

1. Présentoir de magasin comprenant une pluralité de rayons (33-37) sur lesquels des articles peuvent être exposés et un châssis supportant lesdits rayons (33-37), dans lequel un certain nombre de rayons sont munis d'un moyen de convoyage (3, 4) capable de transporter des articles placés sur le rayon vers l'avant du rayon, et de moyens d'entraînement (54, 55) pour le moyen de convoyage (3, 4), caractérisé par le fait que lesdits moyens d'entraînement sont disposés pour desservir simultanément certains rayons superposés (33-37) au moins.

2. Présentoir de magasin selon la revendication 1, caractérisé en ce que les moyens d'entraînement comprennent une pluralité de tuyaux pneumatiques (54) qui se dilatent quand un fluide de pression y est pompé sous pression.

3. Présentoir de magasin selon la revendication 2, caractérisé en ce que les moyens d'entraînement comprennent une pluralité de montants mobiles (50, 51) qui portent des parties verticalement mobiles (41) d'une pluralité de rayons disposés pour être montés et descendus ensemble par l'intermédiaire d'un moyen de transmission de puissance par alimentation d'un ou plusieurs tuyaux pneumatiques (54).

4. Présentoir de magasin selon la revendication 3, caractérisé en ce que les montants mobiles (50, 51) reposent chacun sur des bandes de levée (52) qui reposent elles-mêmes sur un tuyau pneumatique (54) étendu dans une partie de retenue.

5. Présentoir de magasin selon la revendication 3 ou 4, caractérisé en ce que les montants mobiles (50, 51) sont disposés à proximité de montants fixes (31, 32) et sont raccordés aux dits montants fixes (31, 32) pour pouvoir coulisser vers le haut et vers le bas.

6. Présentoir de magasin selon l'une quelconque des revendications 3 à 5, caractérisé en ce que les parties verticalement mobiles (41) des rayons sont portées par les montants mobiles (50, 51) en vue d'un déplacement en va-et-vient dans la direction horizontale.

7. Présentoir de magasin selon la revendication 6, caractérisé en ce qu'au moins certains d'au moins les montants verticaux (50, 51) se trouvant sur un côté longitudinal du présentoir sont de montants creux logeant un tuyau pneumatique (56) fonctionnellement associé aux parties mobiles (41) des rayons par l'intermédiaire de moyens de transmission de puissance.

8. Présentoir de magasin selon la revendication 7, caractérisé en ce que le tuyau pneumatique (56) pend à l'intérieur des montants creux (51) entre un élément de paroi des montants creux (51) et une bande de poussée (55) disposée à l'intérieur des montants creux, et en ce que, au niveau des rayons, des orifices sont ménagés dans l'élément de paroi des montants creux (51) en face de la bande de poussée (55), orifices par lesquels des saillies des parties mobiles (41) des rayons s'étendent jusque dans les montants creux (51).

9. Présentoir de magasin selon l'une quelconque des revendications 6 à 8, caractérisé par des moyens de rappel (57) qui coopèrent dans la direction horizontale avec les parties mobiles des rayons.

10. Présentoir de magasin selon la revendication 7, 8 ou 9, caractérisé on ce que l'un des montants d'une paire de montants mobiles placés en vis-à-vis l'un de l'autre sur des côtés longitudinaux différents du présentoir est un tuyau pneumatique et l'autre montant de ladite paire contient des ressorts de rappel (57) qui coopèrent avec les parties mobiles (41) des rayons.

11. Présentoir de magasin selon l'une quelconque des revendications 3 à 10, caractérisé en ce que chaque paire de montants mobiles (50, 51) en vis-à-vis l'un de l'autre sur des côtés longitudinaux différents du présentoir sont interconnectés rigidement par des connecteurs (59).

12. Présentoir de magasin selon la revendication 11, caractérisé en ce que les connecteurs (59) comprennent une pluralité de traverses placées juste au-dessus du niveau des rayons et servant également de guides aux articles placés sur les rayons.

13. Présentoir de magasin selon l'une quelconque des précédentes revendications caractérisé en ce que le présentoir comporte une paroi arrière qui permet de réassortir les rayons (33-37) depuis l'arrière.

14. Présentoir de magasin selon la revendication 13, caractérisé en ce que le présentoir est mobile au moins transversalement à la direction longitudinale des rayons (33-37).

15. Présentoir de magasin selon la revendication 13, caractérisé par au moins un pignon (66) pouvant être entraîné, qui est fixé au bas du présentoir, lequel pignon est en prise avec au moins une crémaillère (64, 65).

16. Présentoir de magasin selon l'une quelconque des précédentes revendications caractérisé par des moyens de détection conçus pour coopérer avec une partie au moins de l'avant d'un ou plusieurs rayons (33-37) pour déterminer si cette partie porte des articles sur son côté antérieur et pour, en l'absence d'articles sur le côté antérieur de ces parties, provoquer une alimentation en énergie du moyen de convoyage.

17. Présentoir de magasin selon la revendication 16, caractérisé en ce que les moyens de détection comprennent une cellule sensible à la lumière et une source de lumière associée.
